# EUROPÄISCHE PATENTSCHRIFT

(11) **EP 0 989 077 B1**
(45) Veröffentlichungstag und Bekanntmachung des Hinweises auf die Patenterteilung: **31.03.2004**
(21) Anmeldenummer: 99250279.9
(22) Anmeldetag: 18.08.1999
(51) Int. Cl.: B65G 13/12, B65G 17/00, B65G 37/02, B65G 19/30, B65G 17/24, B65G 47/26

(54) **Förderbahn mit Rollen und Rollenkette hierfür**
Conveyor track with rollers and roller chain therefor
Voie de transport à rouleaux et sa chaîne à rouleaux

(30) Priorität: 22.09.1998 DE 19845781
(43) Veröffentlichungstag der Anmeldung: 29.03.2000
(73) Patentinhaber: Siemens AG, 80333 München (DE)
(72) Erfinder: Schmidt, Heinz, 70567 Stuttgart (DE)

(56) Entgegenhaltungen:
- EP-A- 0 368 807
- EP-A- 0 827 922
- DE-A- 3 432 042
- US-A- 3 653 489
- US-A- 3 944 037
- PATENT ABSTRACTS OF JAPAN vol. 008, no. 032 (M-275), 10. Februar 1984 (1984-02-10) & JP 58 188210 A (KUNIHIKO NAGASAKA;OTHERS: 01), 2. November 1983 (1983-11-02)

## Beschreibung

Die Erfindung betrifft eine Förderbahn mit Rollen für Transportgut, insbesondere eine Röllchenbahn für Werkstückträger, gemäß dem Oberbegriff des Anspruchs 1 sowie eine Rollenkette für eine Förderbahan mit Rollen gemäß dem Oberbegriff des Anspruchs 1.

Aus der deutschen Firmendruckschrift der Mannesmann Dematic Aktiengesellschaft, Wetter mit dem Titel "Demag - Transfersystembaukasten DTS" (siehe Ausgabe 01/1997, Seite 17) ist eine sog. Röllchenstrecke, d.h. eine Rollenbahn für geringe Traglasten, bekannt. Diese Röllchenstrecke besteht im Wesentlichen aus zwei parallel zueinander und voneinander beabstandeten sowie in Förderrichtung verlaufenden Tragelementen, von denen das Stückgut, vorzugsweise Werkstückträger für die Montagetechnik, jeweils an ihren seitlichen Unterseiten abtragbar ist. Die Tragelemente sind hierbei als Alu-Strangpreßprofile mit einem - im Querschnitt gesehen - oberen und unteren sowie in Förderrichtung verlaufenden Hohlraum ausgebildet. Der obere Hohlraum ist oben mit einem in Förderrichtung verlaufenden schlitzförmigen Öffnung versehen, durch die sich innerhalb des Hohlraums gelagerte Tragrollen der Röllchenstrecke in Richtung des Stückgutes erstrecken. Zur Montagevereinfachung werden die Tragrollen nicht jeweils einzeln in die Tragelemente eingebaut, sondern diese sind Bestandteile einer sog. Staurollenkette, die eine Vielzahl von - in Förderrichtung gesehen - hintereinander angeordneten und voneinander beabstandeten Tragrollen aufweist und normalerweise in Staurollenkette-Förderern eingesetzt werden. Die Rollenkette wird zur Montage der Tragrollen in den oberen Hohlraum eingezogen und an dem in Förderrichtung gesehen stromaufwärts gelegen Anfang des Tragelementes gegen Verrutschen in dem Tragelement über einen Bolzen fixiert. Die Tragrollen der Kette und somit die Tragrollen der Förderbahn sind auf den Bolzen der Staurollenkette sowie zwischen deren Laschen gelagert. Da für die hier beschriebene Förderbahn eine Staurollenkette verwendet wird, weist diese seitlich über die Lasche der Kette verlängerten Bolzen auf, auf denen jeweils Laufrollen gelagert sind. Die Laufrollen sind in der Weise auf den Grund des oberen Hohlraums abgestützt, dass eine freie Drehbarkeit der Tragrollen erreicht wird. In besonderer Ausgestaltung wird eine der beiden Tragelemente als Röllchenstrecke mit eingezogener Staurollenkette und das andere Tragelement mit einem ein endlos umlaufenden und angetriebenen Flachgurt versehen, wodurch ein Antrieb des Transportguts auf der Röllchenstrecke möglich ist.

Besonders bei derartig ausgebildeten Förderern kann es dazu kommen, daß bedingt durch die Bauhöhe der Staurollenkette der Flachgurt durch zusätzliche Maßnahmen angehoben werden muß, um das Transportguts waagerecht transportieren zu können. Hierzu werden beispielsweise leistenförmige Kunsstoffprofile auf der Oberseite der Tragelemente befestigt, auf denen dann der Fördergurt abläuft.

Die für diese Art von Rollenbahnen verwendeten und zuvor beschriebenen Staurollenketten sind als Bestandteile von Staurollenketten-Förderern beispielsweise in der deutschen Offenlegungsschrift DE 34 32 042 A1 beschrieben und weisen zur Aufnahme des Transportgutes Tragrollen auf, die auf den Bolzen der Ketten, sowie zwischen den Laschen gelagert sind. Die Kettenteilung ist so gewählt, dass die Rollen frei drehbar sind. Bei den Staurollenketten-Förderern sind die Ketten endlos umlaufend angeordnet und über Laufrollen auf den Tragelementen abgestützt. Die Laufrollen sind jeweils auf den Bolzen der Kette gelagert, die hierfür beidseitig über die Laschen hinaus verlängert sind.

Die im Zusammenhang mit den eingangs beschriebenen Rollenbahnen verwendeten Alu-Stranggießprofile mit den oberen und unteren Hohlräumen können auch als Tragelemente für Staurollenketten-Förderer eingesetzt werden (s. Seite 16 der vorgenannten deutschen Firmendruckschrift der Mannesmann Dematic Aktiengesellschaft). Das untere Trum der Staurollenkette wird hierbei dann in dem unteren Hohlraum des Tragelementes zurückgeführt.

Der vorliegenden Erfindung liegt die Aufgabe zugrunde, eine Förderbahn mit Rollen für Transportgut, insbesondere eine Röllchenbahn für Werkstückträger, sowie eine Rollenkette, insbesondere für die Verwendung in Förderbahnen mit Rollen, zu schaffen, die eine konstruktive Vereinfachung der Lagerung der Rollen in der Förderbahn sowie der Rollenkette an sich ermöglichen.

Diese Aufgabe wird bei einem Förderbahn mit Rollen durch die im Anspruch 1 aufgeführten Merkmale gelöst. Eine Rollenkette zur Lösung dieser Aufgabe ist in Anspruch 9 angegeben. Vorteilhafte Ausgestaltungen der Erfindung sind in den Unteransprüchen 2 bis 8 und 10 angegeben.

Erfindungsgemäß kann durch die Verwendung von im Grund eines oberen Hohlrauns eines Tragelements einer Förderbahn eingelegten Zwischenelemente, deren Dicke leicht variierbar ist, erreicht werden, dass für eine Förderbahn mit Rollen eine handelsübliche Staurollenkette eingesetzt werden kann, die nicht die sonst üblichen Laufrollen aufweist. Vorteilhafterweise erfolgt somit eine direkte Abstützung der Bolzen der Rollenkette auf dem Grund des Hohlraums des Tragelementes bzw. auf hierauf eingelegten Zwischenelementen. Durch die Möglichkeit über die Maße der in den Grund des Hohlraums des Tragelementes eingelegten Zwischenelemente einzustellen, wie hoch die Tragrollen aus der oberen Öffnung des Hohlraums des Tragelementes nach oben hinausragen sollen. Besonders vorteilhaft hat sich als Material für die Zwischenelemente PE herausgestellt.

Bei entsprechender Ausgestaltung des Grunds des oberen Hohlraums ist auch eine direkte Abstützung der Bolzen hierauf möglich. Der Vorteil der Eintstellbarkeit durch die Zwischenelemente geht hierbei verloren. Insgesamt wird eine besonders einfache Ausgestaltung des Rollenförderers sowie der Rollenkette an sich erreicht, da auf eine zusätzliche Anordnung von Tragrollen auf die Bolzen wie bei den bekannten Staurollenketten verzichtet wird. Gleichzeitig werden auch die von der Staurollenkette bekannten Vorteile in Bezug auf die frei drehbare Tragrolle erhalten.

Auch sind vorteilhafterweise Aussparungen für die Zwischenelemente in den Grund des oberen Hohraums angeordnet und zwischen den Aussparungen für die Zwischenelemente ist eine weitere Nut vorgesehen, in die die Tragrollen unter Beibehaltung eines Spaltes und somit ihrer Drehbarkeit eintauchen können. Um eine einwandfreie Abstützung der Rollenkette mit den beidseitig über die Laschen herausragenden Bolzen zu gewährleisten, sind in dem Grund des Hohraums zwei parallele und voneinander beabstandet verlaufende Aussparungen für die Zwischenelemente vorgesehen. Der Abstand der Aussparungen ist so gewählt, dass die Bolzen der Rollenkette sicher von den Zwischenelementen getragen werden können.

Als besonders vorteilhaft erweist sich, dass durch die nunmehr über einen weiteren Bereich mögliche Einstellbarkeit des Maßes, mit dem die Tragrollen über die Oberseite des Tragelementes hinausragen, auch besonders einfach möglich ist, verschiedene Förderbahntypen, wie beispielsweise Rollenbahnen oder Gurtbahnen, miteinander zu kombinieren. Bei einer Förderbahn mit zwei parallelen Förderrichtung verlaufenden Tragelementen und mit verschiedenen Fördermitteln wie Rollen oder Gurten können somit die unterschiedliche Bauhöhen der Fördermittel leicht ausgeglichen werden. Vorzugsweise sind die Tragelemente über Querträger voneinander beabstandet und ein Tragelement ist als Rollenbahn und das andere Tragelement als Gurtbahn ausgebildet. Die Verwendung des standardisierten Tragelementes zur Aufnahme und Abstützung eines Flachgurtes kann besonders einfach durch das Einstecken eines leistenförmigen Formteils in die Öffnung des oberen Hohlraums des Tragelementes erreicht werden. Der Flachgurt läuft dann auf dem leistenförmigen Formteil ab. Die bei dem gegenüberliegenden Tragelement verwendete Rollenkette mit ihren aus der Öffnung herausragenden Tragrollen können vorteilhafterweise durch Wahl der Höhe der Zwischenelemente gegenüber einer sonst üblichen Staurollenkette weiter abgesenkt werden, so dass die Tragrollen in einer gemeinsamen horizontalen Förderebene mit der Oberseite des Flachgurtes liegen. Das Transportgut, insbesondere die palettenförmigen Werkstückträger, können somit weitestgehend horizontal gefördert werden.

Auch wird durch die vorliegende Erfindung eine Rollenkette, insbesondere für die Verwendung in Förderbahnen mit Rollen zur Verfügung gestellt, die über Bolzen miteinander verbundene Laschen sowie auf den Bolzen gelagerte sowie über die Laschen hinausragende Tragrollen aufweist zur Verfügung gestellt. Die Rollenkette erweist sich als konstruktiv sehr einfach, da auf die Anordnung der Laufrollen verzichtet werden kann. Vorteilhafterweise sind die Bolzen seitlich über die Laschen hinaus verlängert, um diese direkt auf einem Konstruktionselement abstützen zu können.

Die Erfindung wird nachfolgend anhand eines in einer Zeichnung dargestellten Ausführungsbeispiels näher beschrieben. Es zeigen:
- Figur 1: eine Ansicht einer Rollenbahn im Schnitt quer zur Förderrichtung und
- Figur 2: eine Draufsicht auf einen Längsträger der Förderbahn, die teilweise im Aufriss dargestellt ist.

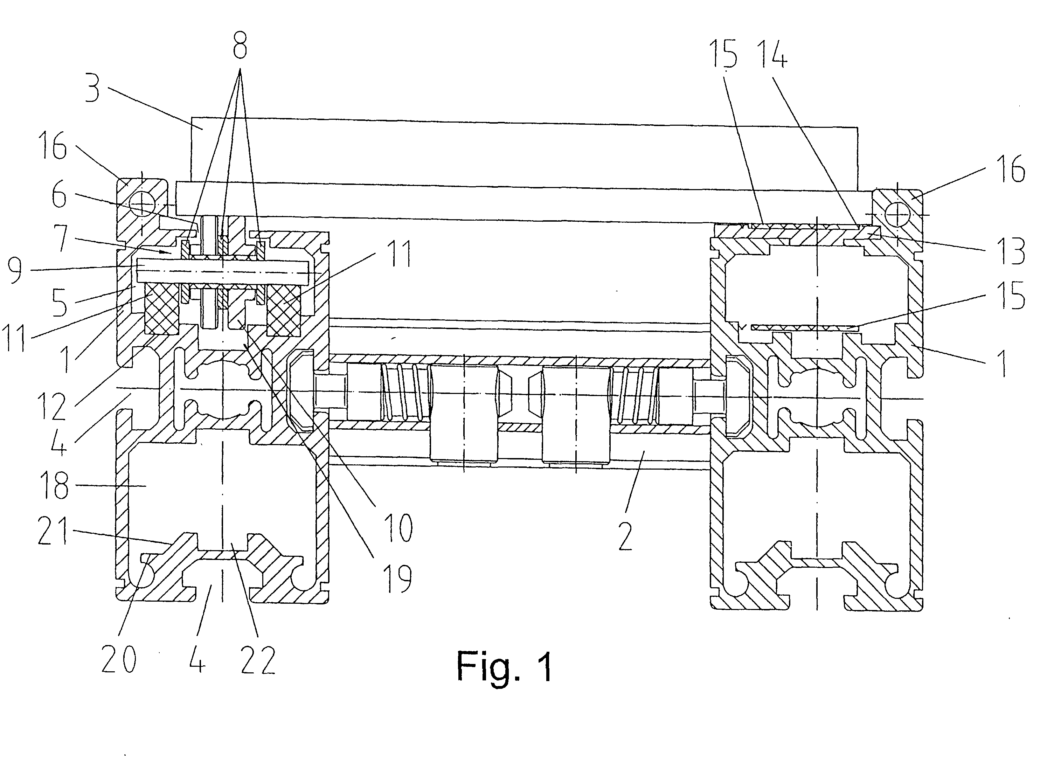

Die in dem Ausführungsbeispiel gezeigte Förderbahn besteht im Wesentlichen aus zwei parallel und in Förderrichtung F verlaufenden Tragelementen 1 (siehe Figur 1). Diese Tragelemente 1 sind über Querträger 2 voneinander beabstandet und miteinander verbunden. Die Tragelemente 1 bzw. die Querträger 2 sind über nicht dargestellte Stützen auf dem Boden oder über einen Hängerahmen gehalten.

Die Figur 1 zeigt eine Ansicht der Tragelemente 1 und einen Quertäger 2 der Förderbahn in einem Schnitt quer zur Förderrichtung F. Es ist ersichtlich, dass über die beiden in Förderrichtung F verlaufenden Tragelemente 1 das zu fördernde stückige Transportgut 3, insbesondere palettenförmige Werkstückträger einer Montageförderstrecke, nur seitlich von den Tragelementen 1 unterstützt werden. Ein Transport von Behälter oder Paletten ist auch möglich. Die Tragelemente 1 sind hierbei als Alu-Strangpressprofile ausgebildet, die an ihren seitlichen und unteren Flächen jeweils schlitzförmige Nuten 4 aufweisen. Die Nuten 4 sind mit Hinterschneidungen für das Einsetzen von nicht dargestellten Nutensteinen versehen ist, um die Tragelemente 1 mit den Querträgern oder weiteren Konstruktionselementen, wie beispielsweise abzweigende Tragelemente, Abdeckungen oder Stützbeine, verbinden zu können.

Des Weiteren weist das Tragelement 1 einen oberen Hohlraum 5 auf, der im Wesentlichen einen rechteckigen Querschnitt hat und mit einer nach oben in Richtung des zu fördernden Transportgutes 3 weisenden sowie in Förderrichtung F verlaufenden schlitzförmigen Öffnung 6 versehen ist. In den Hohlraum 5 des linken Tragelementes 1 ist eine Rollenkette 7, die sich in Förderrichtung F erstreckt, eingezogen. Die Rollenkette 7 besteht im Wesentlichen aus Laschen 8, die in üblicher Weise über Bolzen 9 miteinander verbunden sind. Die Rollenkette 7 kann auch als sogenannte Seitenbogenkette ausgebildet werden, d. h. die in Förderrichtung F verlaufende Kette kann seitlich in horizontalen Rechts- oder Linksbögen verlegt werden. Hierzu sind die Öffnungen in den Laschen 8 für die Aufnahme der Bolzen 9 aufgeweitet ausgebildet.

Auf den Bolzen 9 sowie zwischen den Laschen 8 ist jeweils mindestens eine Tragrolle 10 gelagert, auf der das Transportgut 3 rollend abgetragen wird. Hierzu ragen die Tragrollen 10 mit ihrem äußeren oberen Umfang über die Tragelemente 1 im Bereich der Öffnung 6 hinaus. Die Tragrollen 10 sind hierbei jeweils mit geringem Abstand seitlich von den Rändern der Öffnung 6 im Tragelement 1 beabstandet. Um eine freie Drehbarkeit der Tragrollen 10 zu erreichen, sind die Bolzen 9 - wie von Staurollenketten bekannt - seitlich über die Laschen 8 hinaus verlängert und stützen sich in den Hohlraum 5 auf dem Tragelement 1 ab.

Da der Grund des oberen Hohlraums 5 gemäß dem in dem Ausführungsbeispiel gezeigten Tragelement 1 auch zur Aufnahme von endlos umlaufenden Staurollenketten dient, sind dort bereits zwei - in Förderrichtung F gesehen - jeweils von außen und gegenüberliegend sowie parallel mit Abstand zueinander verlaufende Aussparungen 12 vorgesehen. Diese Aussparungen 12 haben - im Querschnitt gesehen - ein rechteckförmiges Profil.

Bei einer Verwendung dieses Tragelementes 1 für endlos umlaufende Staurollenkettenförderer laufen in den Aussparungen 12 die auf den Bolzen gelagerten Laufrollen ab und werden seitlich von den inneren Begrenzungswänden der Aussparungen 12 geführt. Zwischen den beiden Aussparungen 12 ist eine weitere Nut 19 in dem Grund des Hohlraumes 5 vorgesehen. In dieser Nut 19 werden die Tragrollen 10 der Staurollenkette in Förderrichtung bewegt, ohne hierbei die Innenwände der Nut 19 zu berühren. Hierdurch wird die freie Drehbarkeit der Staurollen gewährleistet.

Des Weiteren ist aus der Figur 1 ersichtlich, dass das Tragelement 1 zusätzlich zu dem oberen Hohlraum 5 auch einen unteren rechteckigen Hohlraum 18 aufweist, der bei Verwendung des Tragelements 1 für Staurollenkettenförderer für die Rückführung des unteren Trums der Staurollenkette benutzt wird. Um das untere Trum, insbesondere dessen Laufrollen führen zu können, sind in dem Grund des unteren Hohlraums Laufbahnen 20 mit schrägen, jeweils nach innen weisenden Führungsflächen 21 vorgesehen. Zwischen den Laufbahnen 20 ist wiederum eine Nut 22 vorgesehen, um einen Freilauf der Tragrolle 10 zu gewährleisten.

Bei der Verwendung der Tragelemente 1 für eine Rollenbahn gemäß der vorliegenden Erfindung tauchen die Tragrollen 10 unter Beihaltung eines allseitigen Spaltes in die Nut 19 ein. Gegenüber einer Staurollenkette sind bei der erfindungsgemäßen Rollenkette 7 auf dem Bolzen 9 keine Laufrollen vorgesehen. Um auch bei der Rollenkette 7 eine freie Drehbarkeit der Tragrollen 10 zu gewährleisten, d.h. einen Abstand zwischen der Umfangsfläche der Tragrolle und dem Grund des oberen Hohlraumes 5 zu schaffen, sind Zwischenelemente 11, die als sich in Förderrichtung erstreckende und vorzugsweise aus PE hergestellte Kunststoffleisten ausgebildet sind, in die Aussparungen 12 eingelegt. Hierdurch wird die somit zunächst niedriger als eine Staurollenkette ausgebildete Rollenkette 7 in Richtung des Transportgutes 3 angehoben. Vorteilhafterweise kann durch eine Veränderung der Höhe der Zwischenelemente 11 der Betrag, um den die Tragrollen 10 aus dem Tragelement 11 nach oben herausragen innerhalb des vorgegebenen Spieles zwischen den Laschen 8 der Kette und dem der oberen Innenwand des Hohlraums 5, eingestellt werden, ohne hierbei Änderungen an dem standardmäßigen Tragelement 1 vorzunehmen.

Bei entsprechender Ausgestaltung der Abmessungen des Tragelementes 1 ist es grundsätzlich auch möglich ohne Verwendung der Zwischenelemente 11 die Bolzen 9 direkt auf den Grund des Hohlraums 5 innerhalb des Tragelements 1 abzutragen.

Die zuvor beschriebene Einstellmöglichkeit durch die Variation der Höhen der Zwischenelemente 11 stellt sich als sehr vorteilhaft heraus, wenn in dem parallel zu dem zuvor beschriebenen Tragelement 1 verlaufenden rechten Tragelement 1 keine Röllchenstrecke mit freidrehenden Tragrollen 10 vorgesehen ist, sondern zum Antrieb des Transportgutes 3 ein endlos umlaufender Flachgurt 15 vorgesehen ist. Hierzu wird in die obere Öffnung 6 des Hohlraums 5 ein leistenförmiges Formteil 13 eingelegt, mit dem einerseits die Öffnung 6 verschlossen wird und andererseits eine rechteckförmige Führungsbahn 14 für einen Flachgurt 15 geschaffen wird. Durch entsprechende Anpassung der Höhe der Zwischenelemente 11 kann trotz Verwendung von gleichartig ausgebildeten Tragelementen 1 ein waagerechter Transport des Stückgutes 3 erreicht werden. Würde hier gemäß der im Stand der Technik bekannten Ausführungsform eine Staurollenkette verwendet werden, hätte dies zur Folge, dass die Tragrolle 10 nicht ausreichend weit aus der Öffnung 6 des Tragelementes 1 herausgezogen würde. Das Transportgut 3 würde schräg aufliegen.

Ferner ist ersichtlich, dass das Untertrum des Flachgurtes innerhalb des oberen Hohlraumes 5 und auf dessen Grund gleitend abgetragen wird. Den Zeichnungen ist nicht zu entnehmen, dass durch am Anfang und am Ende der jeweiligen Tragelemente 1 angeordnete Umlenkrollen der Flachgurt 15 umgelenkt sowie angetrieben wird.

Desweiteren ist der Figur 1 zu entnehmen, dass die Tragelemente 1 jeweils seitlich eine in Förderrichtung verlaufende Führungsleiste 16 aufweisen, um das auf den Tragrollen 10 und dem Flachgurt 15 geförderte Stückgut 3 seitlich zu führen.

Eine derartige Förderbahn eignet sich besonders für den Transport von Werkstückträgern mit geringen Traglasten.

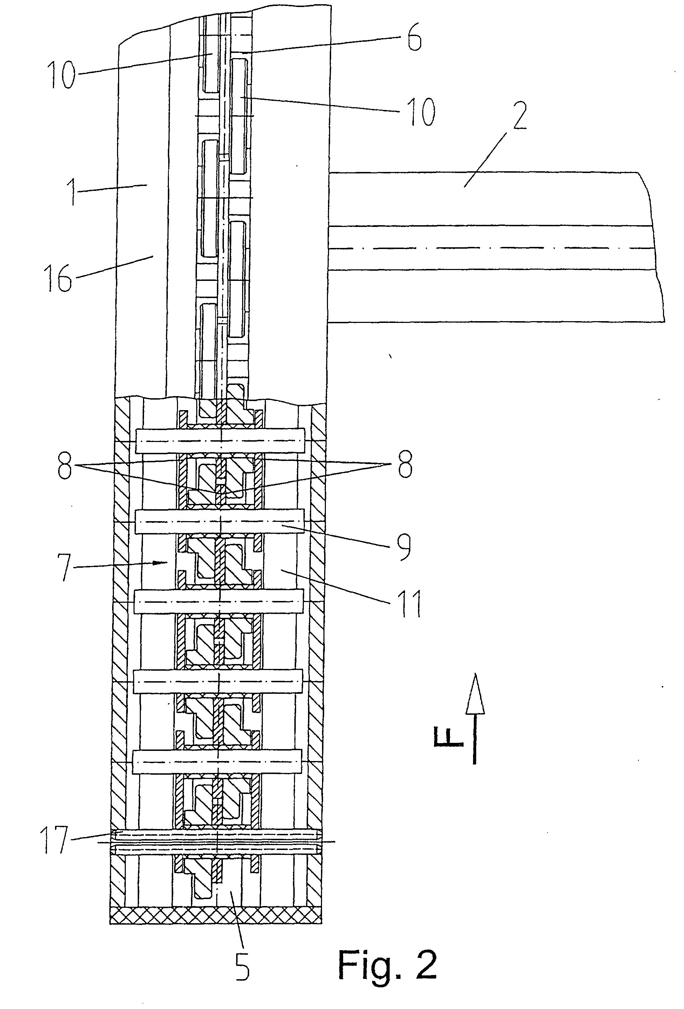

Die Figur 2 zeigt eine Draufsicht auf einen Abschnitt des linken Tragelementes 1 gemäß Figur 2 sowie teilweise einen hieran anschließenden Querträger 2. Um den näheren Aufbau der im vorliegenden Fall verwendeten Rollenkette 7 besser erläutern zu können, ist das Tragelement 1 teilweise im Aufriss dargestellt.

Die im vorliegenden Ausführungsbeispiel verwendete Rollenkette 7 hat - in Förderrichtung F gesehen - versetzt zueinander angeordnete Tragrollen 10, um zu ermöglichen, dass auf jedem Bolzen 9 eine Tragrolle 10 lagerbar ist, dessen Durchmesser größer als die Kettenteilung ist. Hierzu sind in Förderrichtung F gesehen die Tragrollen 10 jeweils abwechselnd nach rechts oder links versetzt auf dem Bolzen 9 angeordnet. Um eine Führung der Tragrollen 10 in der jeweiligen rechten oder linken Position zu erreichen, sind gegenüber einer normalen Rollenkette 7 mit nur einer Tragrolle 10 auf einem Bolzen 9 ein Teil der Laschen 8 nach innen zwischen die Tragrollen 10 versetzt angeordnet.

Auch zeigt die Figur 2, dass - in Förderrichtung F gesehen - am stromaufwärts gelegenen Anfang des Tragelementes 1 die in den Hohlraum 5 eingelegte Rollenkette 7 über eine Spannhülse 17 mit dem Tragelement 1 verbunden ist. Die Spannhülse 17 ist hier anstatt eines Bolzens 9 mit den Laschen 8 der Rollenkette 7 verbunden worden. Auf dieser Spannhülse 17 ist ebenfalls eine Tragrolle 10 gelagert.

## Patentansprüche

1. Förderbahn mit Rollen für Transportgut, insbesondere Röllchenbahn für Werkstückträger, mit einer Vielzahl von in Förderrichtung (F) gesehen hintereinander angeordneten gelagerten Tragrollen (10), die Bestandteil einer Laschen (8) und Bolzen (9) aufweisenden Rollenkette (7) sind, deren Bolzen (9) seitlich über die Laschen (8) hinausragen und auf in Förderrichtung (F) verlaufenden Tragelementen (1) der Förderbahn abgestützt sind, wobei die Tragrollen (10) über die Laschen (8) und die Tragelemente (1) in Richtung des Transportgutes (3) hinausragen,
**dadurch gekennzeichnet,**
**dass** die Bolzen (9) der Rollenkette (7) sich ohne Laufrollen direkt auf dem Tragelement (1), oder direkt auf das Tragelement (1) aufgelegte Zwischenelemente (11), abstützen.

2. Förderbahn nach Anspruch 1,
**dadurch gekennzeichnet,**
**dass** die Tragelemente (1) einen oberen Hohlraum (5) haben, der in Längsrichtung der Tragelemente (1) und in Förderrichtung (F) verläuft sowie an seiner dem Transportgut (3) zugeordneten Seite eine schlitzförmige, ebenfalls in Förderrichtung (F) verlaufenden Öffnung (6) hat und die Zwischenelemente (11) leistenförmig sind sowie in Aussparungen (12) eingelegt sind, die in Förderrichtung (F) und im Grund des Hohlraumes (5) verlaufen.

3. Förderbahn nach Anspruch 2,
**dadurch gekennzeichnet,**
**dass** in dem Grund des Hohlraumes (5) zwei parallel und voneinander beabstandet verlaufende Aussparungen (12) für die Zwischenelemente (11) angeordnet sind, deren Abstand zueinander so gewählt ist, dass die Zwischenelemente (11) die beidseitig über die Laschen (8) hinausragende Bolzen (9) abgestützt werden.

4. Förderbahn nach Anspruch 3,
**dadurch gekennzeichnet,**
**dass** zwischen den Aussparungen (12) eine weitere Nut (19) vorgesehen ist, in die die Tragrollen (10) unter Beibehaltung eines Spaltes eintauchen.

5. Förderbahn nach einem der Ansprüche 1 bis 4,
**dadurch gekennzeichnet,**
**dass** die Zwischenelemente (11) aus PE hergestellt sind.

6. Förderbahn nach einem der Ansprüche 1 bis 5,
**dadurch gekennzeichnet,**
**dass** die Rollenkette (7) an einem Ende des Tragelementes (1) vorzugsweise über eine quer zur Förderrichtung (F) verlaufende Spannhülse (17) befestigt ist.

7. Förderbahn nach einem der Ansprüche 2 bis 5,
**dadurch gekennzeichnet,**
**dass** die Förderbahn zwei parallel sowie in Förderrichtung (F) verlaufende Tragelemente (1), die über Querträger (2) voneinander beabstandet sind, aufweist und dass die Tragelemente (1) das Transportgut (3) seitlich unterstützen.

8. Förderbahn nach Anspruch 7,
**dadurch gekennzeichnet,**
**dass** einem Tragelement (1) nach Art einer Rollenbahn eine Rollenkette (7) zugeordnet ist, dem anderen Tragelement (1) nach Art eines Gurtförderers ein endlos umlaufender Flachgurt (15) zugeordnet ist, dass der Flachgurt (15) mit seinen das Transportgut (3) tragenden Trum auf einen leistenförmigen Formteil (13) abläuft, das auf das Tragelement (1) aufgesteckt ist und die Öffnung (6) verschließt, und das Untertrum des Flachgurtes (15) in den Hohlraum (5) zurückgeführt wird.

9. Rollenkette für die Verwendung in Förderbahnen nach einem der Ansprüche 1 bis 8, mit über Bolzen (9) miteinander verbundenen Laschen (8) sowie mit auf Bolzen (9) gelagerten und über die Laschen (8) hinausragenden Tragrollen (10),
**dadurch gekennzeichnet,**
**dass** die Bolzen (9) für eine direkte Abstützung der Rollenkette (7) über die Bolzen (9) auf einem Konstruktionselement (Tragelement (1), zwischen element (11)) beidseitig seitlich über die Laschen (8) hinaus verlängert sind.

10. Rollenkette nach Anspruch 9,
**dadurch gekennzeichnet,**
**dass** die Tragrollen (10) zwischen den Laschen (9) auf den Bolzen (9) gelagert sind.

## Claims

1. Conveyor with rollers for transportable articles, in particular a roller conveyor for workpiece carriers, with a multiplicity of mounted carrying rollers (10) which are arranged one behind the other, as seen in the conveying direction (F), and are a constituent part of a roller chain (7), which has link plates (8) and pins (9) and of which the pins (9) project laterally beyond the link plates (8) and are supported on carrying elements (1) which belong to the conveyor and run in the conveying direction (F), the carrying rollers (10) projecting beyond the link plates (8) and the carrying elements (1) in the direction of the transportable articles (3), **characterized in that** the pins (9) of the roller chain (7) are supported directly on the carrying element (1) without running rollers or directly on intermediate elements (11) positioned on the carrying element (1).

2. Conveyor according to Claim 1, **characterized in that** the carrying elements (1) have a top cavity (5) which runs in the longitudinal direction of the carrying elements (1) and in the conveying direction (F) and, on its side which is assigned to the transportable articles (3), has a slot-like opening (6) likewise running in the conveying direction (F), and the intermediate elements (11) are in the form of strips and are positioned in cutouts (12) which run in the conveying direction (F) and in the base of the cavity (5).

3. Conveyor according to Claim 2, **characterized in that** the base of the cavity (5) contains two parallel and spaced-apart cutouts (12) for the intermediate elements (11), the spacing between which being selected such that the intermediate elements (11) are supported the pins (9) projecting beyond the link plates (8) on both sides.

4. Conveyor according to Claim 3, **characterized in that** provided between the cutouts (12) is a further groove (19) into which the carrying rollers (10) penetrate, a gap being maintained in the process.

5. Conveyor according to one of Claims 1 to 4, **characterized in that** the intermediate elements (11) are produced from PE.

6. Conveyor according to one of Claims 1 to 5, **characterized in that** the roller chain (7) is fastened at one end of the carrying element (1), preferably via a clamping sleeve (17) running transversely to the conveying direction (F).

7. Conveyor according to one of Claims 2 to 5, **characterized in that** the conveyor has two parallel carrying elements (1) which run in the conveying direction (F) and are spaced apart from one another via crossmembers (2), and **in that** the carrying elements (1) support the transportable articles (3) laterally.

8. Conveyor according to Claim 7, **characterized in that** one carrying element (1), in the manner of a roller conveyor, is assigned a roller chain (7) and the other carrying element (1), in the manner of a belt conveyor, is assigned an endlessly circulating flat belt (15), and **in that** the flat belt (15) runs, by way of its strand which bears the transportable articles (3), on a strip-like moulding (13) which is plugged onto the carrying element (1) and closes the opening (6), and the bottom strand of the flat belt (15) is guided back into the cavity (5).

9. Roller chain for use in conveyors according to one of Claims 1 to 8, with link plates (8) which are connected to one another via pins (9) and with carrying rollers (10) which are mounted on pins (9) and project beyond the link plates (8), **characterized in that** the pins (9), for direct support of the roller chain (7) via the pins (9) on a structural element (carrying element (1), intermediate element 11)), are extended laterally beyond the link plates (8) on both sides.

10. Roller chain according to Claim 9, **characterized in that** the carrying rollers (10) are mounted on the pins (9) between the link plates (8).

## Revendications

1. Voie de transport à rouleaux pour du matériel transporté, notamment voie à petits rouleaux pour des porte-pièces, comprenant une pluralité de rouleaux (10) porteurs qui sont montés en étant disposés les uns à la suite des autres, en vue dans la direction (F) de transport, et qui font partie d'une chaîne (7) à rouleaux comportant des maillons (8) et des tourillons (9) et dont les tourillons (9) dépassent latéralement des maillons (8) et sont soutenus sur des éléments (1) porteurs de la voie de transport qui s'étendent dans la direction (F) de transport, les rouleaux (10) porteurs dépassant des maillons (8) et des éléments (1) porteurs en direction du matériel (3) transporté,
**caractérisée en ce que** les tourillons (9) de la chaîne (7) à rouleaux s'appuient directement sur l'élément (1) porteur, sans galets de roulement, ou directement sur des éléments (11) intermédiaires posés sur l'élément (1) porteur.

2. Voie de transport suivant la revendication 1, **caractérisée en ce que** les éléments (1) porteurs possèdent une cavité (5) supérieure, qui s'étend dans la direction longitudinale des éléments (1) porteurs et dans la direction (F) de transport et qui possède, sur son côté associé au matériel (3) transporté, une ouverture (6) en forme de fente s'étendant également dans la direction (F) de transport, et les éléments (11) intermédiaires sont réalisés en forme de barres et sont mis en place dans des évidements (12) qui s'étendent dans la direction (F) de transport et dans le fond de la cavité (5).

3. Voie de transport suivant la revendication 2, **caractérisée en ce que** deux évidements (12), s'étendant parallèlement et à distance entre eux, sont disposés dans le fond de la cavité (5) pour les éléments (11) intermédiaires, évidements dont la distance mutuelle est choisie de telle sorte que les éléments (11) intermédiaires soutiennent les tourillons (9) dépassant de part et d'autre des maillons (8).

4. Voie de transport suivant la revendication 3, **caractérisée en ce qu'**une rainure (19) supplémentaire est prévue entre les évidements (12), dans laquelle les rouleaux (10) porteurs s'enfoncent en conservant un interstice.

5. Voie de transport suivant l'une des revendications 1 à 4, **caractérisée en ce que** les éléments (11) intermédiaires sont fabriqués en polyéthylène.

6. Voie de transport suivant l'une des revendications 1 à 5, **caractérisée en ce que** la chaîne (7) à rouleaux est fixée à une extrémité de l'élément (1) porteur, de préférence au moyen d'une douille (17) de serrage s'étendant transversalement à la direction (F) de transport.

7. Voie de transport suivant l'une des revendications 2 à 5, **caractérisée en ce que** la voie de transport comporte deux éléments (1) porteurs s'étendant en parallèle et dans la direction (F) de transport, qui sont maintenus à distance par des traverses (2), et **en ce que** les éléments (1) porteurs soutiennent sur les côtés le matériel (3) transporté.

8. Voie de transport suivant la revendication 7, **caractérisée en ce qu'**une chaîne (7) à rouleaux est associée à un élément (1) porteur à la manière d'un transporteur à rouleaux, et une courroie (15) plate circulant sans fin est associée à l'autre élément (1) porteur à la manière d'un transporteur à courroie, et **en ce que** la courroie (15) plate s'étend, par son brin portant le matériel (3) transporté, sur une pièce (13) façonnée en forme de barre qui est emboîtée sur l'élément (1) porteur et ferme l'ouverture (6), et le brin inférieur de la courroie (15) plate est ramené dans la cavité (5).

9. Chaîne à rouleaux pour l'utilisation dans des voies de transport suivant l'une des revendications 1 à 8, comportant des maillons (8) mutuellement reliés au moyen de tourillons (9), et comportant des rouleaux (10) porteurs montés sur les tourillons (9) et dépassant des maillons (8),
**caractérisée en ce que** les tourillons (9), en vue d'un soutien direct de la chaîne (7) à rouleaux au moyen des tourillons (9) sur un élément de construction (élément (1) porteur, élément (11) intermédiaire), sont prolongés latéralement de part et d'autre au-delà des maillons (8).

10. Chaîne à rouleaux suivant la revendication 9, **caractérisée en ce que** les rouleaux (10) porteurs sont montés entre les maillons (8) sur les tourillons (9).
